# EUROPEAN PATENT SPECIFICATION

(11) **EP 4 149 986 B1**
(45) Date of publication and mention of the grant of the patent: **07.08.2024**
(21) Application number: 21724338.5
(22) Date of filing: 14.05.2021
(51) Int. Cl.: C08G 18/20, C08G 18/48, C08G 18/76, C08K 3/04, C08L 75/04

(54) **ELECTRICALLY DISSIPATIVE POLYURETHANE FOAMS AND USE THEREOF IN TRENCH BREAKERS OR PIPELINE PILLOWS**
ELEKTRISCH DISSIPATIVE POLYURETHANSCHÄUME UND DEREN VERWENDUNG IN GRABENBRECHERN ODER ROHRLEITUNGSKISSEN
MOUSSES DE POLYURÉTHANE DISSIPATIF ÉLECTRIQUEMENT ET LEUR UTILISATION DANS DES BARRAGES DE TRANCHÉE OU DES COUSSINS DE PIPELINE

(30) Priority: 14.05.2020 US 202063024802 P; 10.06.2020 EP 20179153
(43) Date of publication of application: 22.03.2023
(73) Proprietor: BASF SE, 67056 Ludwigshafen am Rhein (DE)
(72) Inventor: FARKAS, Louis Steven, Wyandotte, MI 48192 (US); YANG, Yue, Wyandotte, MI 48192 (US); KHARCHENKO, Sam, Wyandotte, MI 48192 (US)
(74) Representative: Altmann Stößel Dick Patentanwälte PartG mbB
(86) International application number: PCT/EP2021/062800
(87) International publication number: WO 2021/229044

(56) References cited:
- JP-A- 2008 070 733
- US-A- 4 526 952
- US-A1- 2020 017 653

## Description

### Field of invention

The present invention relates to an electrically dissipative polyurethane foam (PU foam) and its use in trench breakers or pipeline pillows.

### Background of the invention

Polyurethanes, defined as polymeric substances having multiple urethane linkages, belong to a large family of polymers with widely ranging properties and uses. Types of polyurethanes include rigid, semi-rigid and flexible foams; thermoplastic polyurethane; and other miscellaneous types, such as coatings, adhesives, sealants and elastomers. Flexible foams (e.g. that found in most car cushions) are generally open-celled materials, while rigid foams (e.g. building insulation) usually have a high proportion of closed cells. Semi-rigid foams have properties and applications intermediate to rigid and flexible foams.

One growing application of PU foams is their use as static dissipative materials. These materials allow the flow of static electric charges intermediate to those of anti-static and conductive materials. In particular, the dissipative materials allow the charges to flow to ground more slowly in a controlled manner than with conductive materials. These materials are typically used to prevent discharge to and from human contact. The human body being a high conductor of energy, can easily create a static spark. A plastic static dissipative material causes that spark to flow slower, emitting a lower energy to the ground to prevent discharge and possible damage to any sensitive items, thereby making them the ideal material for objects that experience frequent human contact.

PU foams with electrically conductive properties have been described in US pat. No. 4,231,901. The PU foam described here finds application in electronics-manufacturing facility, as well as in shipping electronic devices. The foam comprises an open-cell, impregnable PU foam which is impregnated with an elastomeric-type binder containing in part a film-forming polymer, along with an antistatic or electrically conductive amount of finely divided, particulate, carbon-black particles dispersed about and generally uniformly throughout the impregnated urethane foam.

Another US pat. No. 4,526,952 describes antistatic or electrically conductive thermoplastic polyurethane elastomers with good mechanical properties by means of an economical process. The carbon black was incorporated into the thermoplastic polyurethane elastomer at temperatures below the melting point peak of the rigid crystalline segments.

Cathodic protection for controlling the corrosion of metallic structures in various environments, makes use of the static dissipative materials. In a cathodic protection system, the pipeline acts as the cathode (negatively charged), and sheets of metal buried near the pipeline act as the anode (positively charged). Once the circuit is completed by being attached to a rectifier, the buried metal sheets act as a sacrificial anode which preferentially corrode over the cathode, pipeline, thus protecting the pipeline against corrosion. While coating has been previously used for preventing corrosion, the fact that these coatings have defects as thermal expansion leads to cracking renders them unsuitable for this application. Since PU foams are good insulators, they have been used for this application as well.

PU foams for trench breakers are described in US pat. No. 8,568,061 B2. In particular, floatation resistant foam with sufficient strength and density to provide stability and inhibit erosion at pipeline trench sites are described. The PU foam suitable for use in trench breaker has at least 50% open cell, a density of 1.3 lb/ft³ (0.021 g/cm³) to 3.50 lb/ft³, (0.056 g/cm³) a minimum compressive strength of 17 psi (1.17 Bar) parallel to the rise of the foam, and exhibits a buoyancy loss of at least 20% after 24 hours of testing under 10 feet (3.048m) of water.

Electrically conductive PU foams are described in US pat. No. 10,259,923 B1. Use of carbon nanomaterials comprising isocyanate treated nanoplatelets formed by exfoliating graphite oxide nanoplatelets from isocyanate-treated graphite oxide in a dispersing medium is suggested for mitigation of corrosion in pipelines. JP2008070733 discloses a toner supply roller comprising a metallic cylinder and a polyurethane sponge layer. US2020/017653 discloses a buried metallic pipeline structure comprising cured compositions of electrically-conductive polyurethane foam.

The existing PU foams lack any disclosure for having electrical resistivity in the static dissipative range, i.e. 1.0×10² Ω.m to 1.0×10⁹ Ω.m, as determined according to ASTM D257-14. Also, the existing PU foams tend to act as an electrical shield to the cathodic protection current, making the sacrificial anode method ineffective. With carbon based fillers as suitable ingredients to control the insulative property of the PU foam, there were still some limitations, particularly owing to their nano size. One such limitation was that the nanoparticles easily aggregate together, thus limiting the chance of the formation of an electrical pathway of filler in the foam. Also, the presence of nanoparticles influenced the foam formation by affecting the processing parameters, thereby resulting in inferior mechanical properties in the final PU foam.

It was, therefore, an object of the present invention to provide a PU foam formulation having electrical resistivity in the static dissipative range with acceptable mechanical properties, thereby rendering it useful for static dissipative materials, particularly for trench breakers or pipeline pillows.

### Summary of the invention

Surprisingly, it has been found that the above-identified object is met by providing a PU foam which is obtained by reacting a mixture comprising at least one isocyanate component, a first polyether polyol having a nominal functionality in between 2.0 to 3.5 and OH value in between 450 mg KOH/g to 600 mg KOH/g as the at least one isocyanate reactive component, 1.0 wt.% to 15.0 wt.% of carbon black having a BET surface area in between 600 m²/g to 1200 m²/g, at least one blowing agent, and at least one amine catalyst.

Accordingly, the presently claimed invention is directed to a PU foam which is obtained by reacting a mixture comprising:
(A) at least one isocyanate component,
(B) at least one isocyanate reactive component comprising a first polyether polyol having a nominal functionality in between 2.0 to 3.5 and OH value in between 450 mg KOH/g to 600 mg KOH/g,
(C) carbon black having a BET surface area in between 600 m²/g to 1200 m²/g,
(D) at least one blowing agent, and
(E) at least one amine catalyst,
wherein the amount of carbon black (C) is in between 1.0 wt.% to 15.0 wt.% based on the total weight of the mixture.

The presently claimed invention is also directed to a process for preparing the above PU foam.

The presently claimed invention is also directed to the use of the above PU foam for static dissipative materials.

The presently claimed invention is also directed to a method for producing composite structure comprising the above PU foam.

The presently claimed invention is also directed to a trench breaker or pipeline pillow comprising the above PU foam.

The presently claimed invention is also directed to a method of supporting trench pipes using the above PU foam.

### Detailed description of the invention

Before the present compositions and formulations of the invention are described, it is to be understood that this invention is not limited to particular compositions and formulations described, since such compositions and formulation may, of course, vary. It is also to be understood that the terminology used herein is not intended to be limiting, since the scope of the present invention will be limited only by the appended claims.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms "first", "second", "third" or "(A)", "(B)" and "(C)" or "(a)", "(b)", "(c)", "(d)", "i", "ii" etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the appended claims, any of the claimed embodiments can be used in any combination.

Furthermore, the ranges defined throughout the specification include the end values as well, i.e. a range of 1 to 10 implies that both 1 and 10 are included in the range.

The present invention directed towards a PU foam which is obtained by reacting a mixture comprising:
(A) at least one isocyanate component,
(B) at least one isocyanate reactive component comprising a first polyether polyol having a nominal functionality in between 2.0 to 3.5 and OH value in between 450 mg KOH/g to 600 mg KOH/g,
(C) carbon black having a BET surface area in between 600 m²/g to 1200 m²/g, accoding to method ASTM D6556-19a,
(D) at least one blowing agent, and
(E) at least one amine catalyst,
wherein the amount of carbon black (C) is in between 1.0 wt.% to 15.0 wt.% based on the total weight of the mixture.

The PU foam can be a rigid PU foam characterized with a foam density in between 20 kg/m³ to 150 kg/m³, as determined according to ASTM D1622 and an electrical resistivity in the static dissipative range, i.e. 1.0×10² Q.m to 1.0×10⁹ Ω.m, as determined according to ASTM D257-14. The density of the PU foam can also be in between 20 kg/m³ to 100 kg/m³, or 20 kg/m³ to 80 kg/m³, or 20 kg/m³ to 50 kg/m³.

In the present context, OH value is determined according to DIN 53240.

The mixture as defined in claim 1 in some cases does not contain any other carbon-based fillers, except carbon black having BET surface area in between 600 m²/g to 1200 m²/g. In particular, no carbon nanotubes, graphite, and/or graphene are present in the mixture in the embodiment 1.

### Isocyanate component (A)

The isocyanate component can comprises an aromatic isocyanate or an aliphatic isocyanate. It is to be understood that the isocyanate includes both monomeric and polymeric forms of the aliphatic or aromatic isocyanate. By the term "polymeric", it is referred to the polymeric grade of the aliphatic or aromatic isocyanate comprising, independently of each other, different oligomers and homologues.

The aliphatic isocyanate can be selected from tetramethylene 1,4-diisocyanate, pentamethylene 1,5-diisocyanate, hexamethylene 1,6-diisocyanate, decamethylene diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, cyclobutane-1,3-diisocyanate, 1,2-, 1,3- and 1,4-cyclohexane diisocyanates, 2,4- and 2,6-methylcyclohexane diisocyanate, 4,4'- and 2,4'-dicyclohexyldiisocyanates, 1,3,5-cyclohexane triisocyanates, isocyanatomethylcyclohexane isocyanates, isocyanatoethylcyclohexane isocyanates, bis(isocyanatomethyl)-cyclohexane diisocyanates, 4,4'-diisocyanatodicyclohexylmethane, pentamethylene 1,5-diisocyanate, isophorone diisocyanate and mixtures thereof.

The isocyanate component can comprises an aromatic isocyanate. Further the isocyanate component can consists of the aromatic isocyanate only.

Suitable aromatic isocyanate is selected from toluene diisocyanate; polymeric toluene diisocyanate, methylene diphenyl diisocyanate and/or polymeric methylene diphenyl diisocyanate; m-phenylene diisocyanate; 1,5-naphthalene diisocyanate; 4-chloro-1; 3-phenylene diisocyanate; 2,4,6-toluylene triisocyanate, 1,3-diisopropylphenylene-2,4-diisocyanate; 1-methyl-3,5-diethylphenylene-2,4-diisocyanate; 1,3,5-triethylphenylene-2,4-diisocyanate; 1,3,5-triisoproply-phenylene-2,4-diisocyanate; 3,3'-diethyl-bisphenyl-4,4'-diisocyanate; 3,5,3',5'-tetraethyl-diphenylmethane-4,4'-diisocyanate; 3,5,3',5'-tetraisopropyldiphenylmethane-4,4'-diisocyanate; 1-ethyl-4-ethoxy-phenyl-2,5-diisocyanate; 1,3,5-triethyl benzene-2,4,6-triisocyanate; 1-ethyl-3,5-diisopropyl ben-zene-2,4,6-triisocyanate, tolidine diisocyanate and 1,3,5-triisopropyl benzene-2,4,6-triisocyanate.

The aromatic isocyanate can be selected from toluene diisocyanate; polymeric toluene diisocyanate, methylene diphenyl diisocyanate and/or polymeric methylene diphenyl diisocyanate; m-phenylene diisocyanate; 1,5-naphthalene diisocyanate; 4-chloro-1; 3-phenylene diisocyanate; 2,4,6-toluylene triisocyanate, 1,3-diisopropylphenylene-2,4-diisocyanate; 1-methyl-3,5-diethylphenylene-2,4-diisocyanate. Particularly the aromatic isocyanate is selected from toluene diisocyanate; polymeric toluene diisocyanate, methylene diphenyl diisocyanate and/or polymeric methylene diphenyl diisocyanate; m-phenylene diisocyanate; 1,5-naphthalene diisocyanate; 4-chloro-1; 3-phenylene diisocyanate. More particularly, the aromatic isocyanate is selected from toluene diisocyanate; polymeric toluene diisocyanate, methylene diphenyl diisocyanate and/or polymeric methylene diphenyl diisocyanate; m-phenylene diisocyanate. Further the aromatic isocyanate is selected from methylene diphenyl diisocyanate and/or polymeric methylene diphenyl diisocyanate.

In one embodiment, the isocyanate component consists of methylene diphenyl diisocyanate and/or polymeric methylene diphenyl diisocyanate.

Methylene diphenyl diisocyanate is available in three different isomeric forms, namely 2,2'-methylene diphenyl diisocyanate (2,2'-MDI), 2,4'-methylene diphenyl diisocyanate (2,4'-MDI) and 4,4'-methylene diphenyl diisocyanate (4,4'-MDI). Methylene diphenyl diisocyanate can be classified into monomeric methylene diphenyl diisocyanate and polymeric methylene di-phenyl diisocyanate referred to as technical methylene diphenyl diisocyanate. Polymeric methylene diphenyl diisocyanate includes oligomeric species and methylene diphenyl diisocyanate isomers. Thus, polymeric methylene diphenyl diisocyanate may contain a single methylene diphenyl diisocyanate isomer or isomer mixtures of two or three methylene diphenyl diisocyanate isomers, the balance being oligomeric species. Polymeric methylene diphenyl diisocyanate tends to have isocyanate functionalities of higher than 2.0. The isomeric ratio as well as the amount of oligomeric species can vary in wide ranges in these products. For instance, polymeric methylene diphenyl diisocyanate may typically contain 30 wt.-% to 80 wt.-% of methylene diphenyl diisocyanate isomers, the balance being said oligomeric species. The methylene diphenyl diisocyanate isomers are often a mixture of 4,4'-methylene diphenyl diisocyanate, 2,4'-methylene diphenyl diisocyanate and very low levels of 2,2'-methylene di-phenyl diisocyanate.

### Isocyanate reactive component (B)

The isocyanate reactive component comprises a first polyether polyol having a nominal functionality in between 2.0 to 3.5 and OH value in between 450 mg KOH/g to 600 mg KOH/g.

The nominal functionality of the first polyether polyol can be in between 2.0 to 3.4, or in between 2.1 to 3.4, or in between 2.1 to 3.3, or in between 2.2 to 3.3. In another embodiment, it is in between 2.2 to 3.2, or in between 2.3 to 3.2, or in between 2.3 to 3.1, or in between 2.4 to 3.1. Further it can be in between 2.5 to 3.1, or in between 2.6 to 3.1, or in between 2.7 to 3.1. Furthermore, it can be in between 2.8 to 3.1. or in between 2.9 to 3.1.

The OH value of the first polyether polyol can be in between 450 mg KOH/g to 590 mg KOH/g. Also it can be in between 450 mg KOH/g to 580 mg KOH/g, or in between 450 mg KOH/g to 570 mg KOH/g, or in between 460 mg KOH/g to 570 mg KOH/g, or in between 460 mg KOH/g to 560 mg KOH/g, or in between 470 mg KOH/g to 560 mg KOH/g. It can be in between 470 mg KOH/g to 550 mg KOH/g, or in between 480 mg KOH/g to 550 mg KOH/g, or in between 480 mg KOH/g to 540 mg KOH/g, or in between 480 mg KOH/g to 530 mg KOH/g. It can also be in between 480 mg KOH/g to 520mg KOH/g, or in between 490 mg KOH/g to 520 mg KOH/g.

Suitable first polyether polyols are obtainable by known methods, for example by anionic polymerization with alkali metal hydroxides, e.g., sodium hydroxide or potassium hydroxide, or alkali metal alkoxides, e.g., sodium methoxide, sodium ethoxide, potassium ethoxide or potassium isopropoxide, as catalysts and by adding at least one amine-containing starter molecule, or by cationic polymerization with Lewis acids, such as antimony pentachloride, boron fluoride etherate and so on, or fuller's earth, as catalysts from one or more alkylene oxides having 2 to 4 carbon atoms in the alkylene moiety.

Starter molecules are generally selected such that the nominal functionality of the resulting polyether polyol is in between 2.0 to 3.5. Optionally, a mixture of suitable starter molecules is also used.

Starter molecules for polyether polyols include amine containing and hydroxyl-containing starter molecules. Suitable amine containing starter molecules include, for example, aliphatic and aromatic diamines such as ethylenediamine, propylenediamine, butylenediamine, hexamethylenediamine, phenylenediamines, toluenediamine, diaminodiphenylmethane and isomers thereof.

Other suitable starter molecules further include alkanolamines, e.g. ethanolamine, N-methylethanolamine and N-ethylethanolamine, dialkanolamines, e.g., diethanolamine, N-methyldiethanolamine and N-ethyldiethanolamine, and trialkanolamines, e.g., triethanolamine, and ammonia.

The amine containing starter molecules can be selected from ethylenediamine, phenylenediamines, toluenediamine and isomers thereof.

Hydroxyl-containing starter molecules are selected from trimethylolpropane, glycerol, glycols such as ethylene glycol, propylene glycol and their condensation products such as polyethylene glycols and polypropylene glycols, e.g., diethylene glycol, triethylene glycol, dipropylene glycol, and water or a combination thereof.

Suitable alkylene oxides having 2 to 4 carbon atoms are, for example, ethylene oxide, propylene oxide, tetrahydrofuran, 1,2-butylene oxide, 2,3-butylene oxide and styrene oxide. Alkylene oxides can be used singly, alternatingly in succession or as mixtures. The alkylene oxides can be propylene oxide and/or ethylene oxide. The alkylene oxides can be mixtures of ethylene oxide and propylene oxide that comprise more than 50 wt.-% of propylene oxide.

The first polyether polyol can be based on ethanolamine and a mixture of ethylene oxide and propylene oxide, with a nominal functionality ranging between 2.9 to 3.1 and OH value in between 490 mg KOH/g to 520 mg KOH/g.

The first polyether polyol can be present in between 50 wt.% to 90 wt.%, based on the total weight of the isocyanate reactive component. It can also be present in between 50 wt.% to 85 wt.%, or 55 wt.% to 85 wt.%, or 55 wt.% to 80 wt.%. Also it can be present in between 60 wt.% to 80 wt.%, or 60 wt.% to 75 wt.%.

The isocyanate reactive component further can comprise a second polyol selected from a polyester polyol, a second polyether polyol, a polymer polyol, and a mixture thereof.

Suitable polyester polyols have a nominal functionality in between 1.9 to 3.5 and OH value in between 250 mg KOH/g to 400 mg KOH/g. The nominal functionality can be in between 1.9 to 3.4, or in between 2.0 to 3.4, or in between 2.0 to 3.3, or in between 2.1 to 3.3. Also, it can be in between 2.1 to 3.2, or in between 2.1 to 3.1, or in between 2.1 to 3.0. In yet another embodiment, it is in between 2.2 to 3.0, or in between 2.2 to 2.9, or in between 2.2 to 2.8, or in between 2.3 to 2.8, or in between 2.3 to 2.7. Further it can be in between 2.3 to 2.6, or in between 2.3 to 2.5, or in between 2.4 to 2.5.

The OH value can be in between 250 mg KOH/g to 400 mg KOH/g. It can also be in between 260 mg KOH/g to 400 mg KOH/g, or in between 260 mg KOH/g to 390 mg KOH/g, or in between 270 mg KOH/g to 390 mg KOH/g, or in between 270 mg KOH/g to 380 mg KOH/g, or in between 280 mg KOH/g to 380 mg KOH/g. Further, it can be in between 280 mg KOH/g to 370 mg KOH/g, or in between 290 mg KOH/g to 370 mg KOH/g, or in between 290 mg KOH/g to 360 mg KOH/g, or in between 295 mg KOH/g to 350 mg KOH/g, or in between 295 mg KOH/g to 340 mg KOH/g. Furthermore, it can be in between 295 mg KOH/g to 340 mg KOH/g, or in between 295 mg KOH/g to 330 mg KOH/g, or in between 295 mg KOH/g to 320 mg KOH/g, or in between 295 mg KOH/g to 310 mg KOH/g.

Suitable polyester polyols as second polyol include those prepared by reacting a carboxylic acid and/or a derivative thereof or a polycarboxylic anhydride with a polyhydric alcohol. The polycarboxylic acids can be any of the known aliphatic, cycloaliphatic, aromatic, and/or heterocyclic polycarboxylic acids and can be substituted (e.g., with halogen atoms) and/or unsaturated. Examples of suitable polycarboxylic acids and anhydrides include oxalic acid, malonic acid, glutaric acid, pimelic acid, succinic acid, adipic acid, suberic acid, azelaic acid, sebacic acid, phthalic acid, isophthalic acid, terephthalic acid, trimellitic acid, trimellitic acid anhydride, pyromellitic dianhydride, phthalic acid anhydride, hexahydrophthalic acid anhydride, endomethylene tetrahydrophthalic acid anhydride, glutaric acid anhydride acid, maleic acid, maleic acid anhydride, fumaric acid, and dimeric and trimeric fatty acids, such as those of oleic acid which may be in admixture with monomeric fatty acids. Simple esters of polycarboxylic acids can also be used, such as terephthalic acid dimethylester, terephthalic acid bisglycol and extracts thereof. The polyhydric alcohols suitable for the preparation of polyester polyols can be aliphatic, cycloaliphatic, aromatic, and/or heterocyclic. The polyhydric alcohols optionally can include substituents which are inert in the reaction, for example, chlorine and bromine substituents, and/or may be unsaturated. Suitable amino alcohols, such as monoethanolamine, diethanolamine can also be used. Examples of suitable polyhydric alcohols include ethylene glycol, propylene glycol, polyoxyalkylene glycols (such as diethylene glycol, polyethylene glycol, dipropylene glycol and polypropylene glycol), glycerol, and trimethylolpropane.

Other suitable polyester polyols include aromatic polyester polyols, e.g., those made by transesterifying polyethylene terephthalate (PET) scrap with a glycol such as diethylene glycol or made by reacting phthalic anhydride with a glycol. The resulting polyester polyols can be reacted further with ethylene and/or propylene oxide to form an extended polyester polyol containing additional internal alkyleneoxy groups.

The polyester polyol can be an aromatic polyester polyol selected from the list above. The polyester polyol as second polyol can be an aromatic terephthalate polyester polyol with a nominal functionality in between 2.4 to 2.5 and OH value in between 295 mg KOH/g to 310 mg KOH/g.

Commercially available polyester polyols sold under the tradenames Stepanpol^{®} PS from Stepan Company, Terol^{®} from Huntsman, and Lupraphen^{®} from BASF, may also be used.

The isocyanate reactive component may further comprise a second polyether polyol as the second polyol. The second polyether polyol is different than the first polyether polyol.

The second polyether polyol can have a nominal functionality in between 3.5 to 8.0 and OH value in between 100 mg KOH/g to 450 mg KOH/g. It can also be in between 3.5 to 7.9, or in between 3.5 to 7.7, or in between 3.5 to 7.5, or in between 3.5 to 7.3, or in between 3.5 to 7.1, or in between 3.5 to 7.0. It can also be is in between 3.6 to 7.0, or in between 3.6 to 6.8, or in between 3.6 to 6.6, or in between 3.6 to 6.4, or in between 3.6 to 6.2, or in between 3.6 to 6.0. It can also be is in between 3.7 to 5.9, or in between 3.7 to 5.7, or in between 3.7 to 5.5, or in between 3.7 to 5.3, or in between 3.7 to 5.1, or in between 3.7 to 5.0. It can also be in between 3.8 to 5.0, or in between 3.8 to 4.9, or in between 3.8 to 4.8, or in between 3.9 to 4.7, or in between 3.9 to 4.5, or in between 3.9 to 4.4, or in between 3.9 to 4.3, or in between 3.9 to 4.2, or in between 3.9 to 4.1.

The OH value can be in between 140 mg KOH/g to 450 mg KOH/g, or in between 180 mg KOH/g to 450 mg KOH/g, or in between 220 mg KOH/g to 450 mg KOH/g, or in between 260 mg KOH/g to 450 mg KOH/g, or in between 300 mg KOH/g to 450 mg KOH/g. It can also be in between 340 mg KOH/g to 450 mg KOH/g, or in between 380 mg KOH/g to 440 mg KOH/g, or in between 400 mg KOH/g to 440 mg KOH/g, or in between 410 mg KOH/g to 440 mg KOH/g, or in between 415 mg KOH/g to 435 mg KOH/g.

The second polyether polyol as second polyol can be a Mannich polyol. Mannich polyol is an aromatic polyol obtained as a ring opening addition polymerization product of an alkylene oxide with a nitrogen-containing initiator. Suitable alkylene oxide include ethylene oxide, propylene oxide and mixtures thereof.

The Mannich polyol can have an ethylene oxide content in between 10 wt.% to 40 wt.%, or in between 10 wt.% to 30 wt.% based on the total amount of the alkylene oxide and is a ring-opening addition polymerization product of propylene oxide and ethylene oxide with a Mannich compound that is a reaction product of a phenol, an aldehyde, and an alkanolamine. Examples of phenol include phenol, nonylphenol, cresol, bisphenol A, and resorcinol. Examples of aldehyde include formaldehyde, and paraformaldehyde. Examples of the alkanolamine include monoethanolamine, diethanolamine, triethanolamine, 1-amino-2-propanol, and aminoethyl ethanolamine.

The isocyanate reactive component may also comprise a polymer polyo as the second polyol. These polymer polyols may have a nominal functionality ranging between 2.0 to 8.0 and OH value ranging between 20 mg KOH/g to 1000 mg KOH/g.

Polymer polyols can be stable dispersions of polymer particles in a polyol and thus are not prone to settling or floating. The polymer particles are chemically grafted to the polyol and act as a better reinforcement filler so that the composition of the polymer may be adjusted to give the desired properties. Polymer polyols have a very low moisture content and thus avoid the problems of wet fillers. The polymers in polymer polyols generally have a low density in comparison to inorganic fillers, such as clays or calcium carbonate.

Suitable polymer polyols are selected from styrene-acrylonitrile (SAN) polymer polyols, polyurea suspension (PHD) polymer modified polyols and polyisocyanate polyaddition (PIPA) polymer modified polyols.

SAN polymer polyols are known in the art and are disclosed in lonescu's Chemistry and Technology of Polyols and Polyurethanes, 2nd Edition, 2016 by Smithers Rapra Technology Ltd. In the SAN polymer polyols, a carrier polyol is the polyol in which the in-situ polymerization of olefinically unsaturated monomers is carried out, while macromers are polymeric compounds which have at least one olefinically unsaturated group in the molecule and are added to the carrier polyol prior to the polymerization of the olefinically unsaturated monomers. The use and function of these macromers is described, for example, in US 4,454,255, US 4,458,038 and US 4,460,715. The SAN polymer polyols are usually prepared by free-radical polymerization of the olefinically unsaturated monomers, preferably acrylonitrile and styrene, in a polyether polyol or polyester polyol, usually referred to as carrier polyol, as continuous phase. These polymer polyols are prepared by in-situ polymerization of acrylonitrile, styrene or mixtures of styrene and acrylonitrile, e.g. in a weight ratio of from 90:10 to 10:90 (styrene: acrylonitrile), using methods analogous to those described in DE 1111394, DE 1222669, DE 1152536 and DE 1152537. Moderators, also referred to as chain transfer agents, can also be used for preparing SAN polymer polyols. The use and the function of these moderators is described, for example, in US 4,689,354, EP 0 365 986, EP 0 510 533 and EP 0 640 633, EP 008 444, EP 0731 118.

PHD polymer modified polyols are usually prepared by in-situ polymerization of an isocyanate mixture with a diamine and/or hydrazine in a polyol, e.g. a polyether polyol. Methods for preparing PHD polymer modified polyols are described in, for example, US 4,089,835 and US 4,260,530.

PIPA polymer modified polyols are usually prepared by the in-situ polymerization of an isocyanate mixture with a glycol and/or glycol amine in a polyol. Methods for preparing PIPA polymer modified polyols are described in, for example, US 4,293,470 and US 4,374,209.

The second polyol in the isocyanate reactive component can comprise a mixture of the polyester polyol and the second polyether polyol, as described herein.

Further the second polyol in the isocyanate reactive component can consist of a mixture of the polyester polyol and the second polyether polyol, as described herein. Carbon black (C)

The carbon black has a BET surface area in between 600 m²/g to 1200 m²/g, as determined according to ASTM D6556-19a. In another embodiment, the BET surface area is in between 700 m²/g to 1200 m²/g, or in between 700 m²/g to 1100 m²/g, or in between 800 m²/g to 1100 m²/g. In yet another embodiment, it is in between 800 m²/g to 1050 m²/g, or in between 900 m²/g to 1050 m²/g, or in between 950 m²/g to 1050 m²/g.

The electrical resistivity of the PU foam in the static dissipative range, i.e. 1.0×10² Ω.m to 1.0×10⁹ Ω.m, as determined according to ASTM D257-14, is achieved by using effective amounts of the carbon black in the PU foam. The carbon black is present in between 1.0 wt.% to 15.0 wt.% based on the total weight of the mixture. It can be present in between 2.0 wt.% to 15.0 wt.%, or in between 2.0 wt.% to 14.0 wt.%, or in between 3.0 wt.% to 14.0 wt.%. It can also be present in between 3.0 wt.% to 13.0 wt.%, or in between 3.0 wt.% to 12.0 wt.%, or in between 3.0 wt.% to 11.0 wt.%.

In order to obtain the PU foam, carbon black may be added to A-side and/or B-side component. The carbon black can be added to both A-side and B-side components, however, the amount of carbon black remains in between 1.0 wt.% to 15 wt.%, based on the total weight of the mixture. Carbon black in the mixture with less than 1.0 wt.% results in no change in the electrical resistivity of the PU foam, i.e. the resulting PU foam acts like an insulator with electrical resistivity more than 1.0×10⁹ Ω.m, as determined according to ASTM D257-14. While carbon black in quantities more than 15.0 wt.% results in a highly viscous system, which is very difficult to process using conventional techniques.

In the present context, A-side component includes the isocyanates and optionally the compounds which are non-reactive with the isocyanates, as described herein, for e.g. carbon black. Similarly, the B-side component includes the isocyanate reactive components. In an embodiment, the isocyanate reactive components include the first polyether polyol, carbon black, blowing agents, amine catalyst, and optionally the second polyol and/or additives, as described herein.

Commercially available carbon black fulfilling the above requirements can also be obtained under the tradename Printex^{®} from Orion Engineered Carbons.

### Blowing agent (D)

The blowing agent can be selected from water, hydrocarbons, hydrofluorocarbons, hydrofluoroolefins, hydrochlorofluorocarbons, hydrochlorofluoroolefins, fluorocarbons, dialkyl ethers, cycloalkylene ethers and ketones, and fluorinated ethers. In another embodiment, the blowing agent is selected from water and hydrofluorocarbons. In yet another embodiment, the blowing agent is a mixture consisting of water and hydrofluorocarbons.

Suitable hydrocarbon blowing agents include lower aliphatic or cyclic, linear or branched hydrocarbons such as alkanes, alkenes and cycloalkanes, preferably having from 4 to 8 carbon atoms. Specific examples include n-butane, iso-butane, 2,3-dimethylbutane, cyclobutane, n-pentane, iso-pentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene and any mixture of the above.

Examples of suitable hydrofluorocarbons include 1,1,1,2-tetrafluoroethane (HFC 134a), 1,1,2,2-tetrafluoroethane, trifluoromethane, heptafluoropropane, 1,1,1-trifluoroethane, 1,1,2-trifluoroethane, 1,1,1,2,2-pentafluoropropane, 1,1,1,3-tetrafluoropropane, 1,1,1,3,3-pentafluoropropane (HFC 245fa), 1,1,3,3,3-pentafluoropropane, 1,1,1,3,3-pentafluoro-n-butane (HFC 365mfc), 1,1,1,4,4,4-hexafluoro-n-butane, and 1,1,1,2,3,3,3-heptafluoropropane (HFC 227ea). In one embodiment, the hydrofluorocarbon is 1,1,1,3,3-pentafluoropropane (HFC 245fa).

Examples of suitable hydrochlorofluorocarbons include 1-chloro-1,2-difluoroethane, 1-chloro-2,2-difluoroethane, 1-chloro-1,1-difluoroethane, 1,1-dichloro-1-fluoroethane and monochlorodifluoromethane.

Hydrofluoroolefins (HFOs), also known as fluorinated alkenes, that are suitable according to the present invention, are propenes, butenes, pentenes and hexenes having 3 to 6 fluorine substituents, while other substituents such as chlorine can be present, examples being tetra-fluoropropenes, fluorochloropropenes, for example trifluoromonochloropropenes, pentafluoro-propenes, fluorochlorobutenes, hexafluorobutenes or mixtures thereof. The

HFOs can be selected from cis-1,1,1,3-tetrafluoropropene, trans-1,1,1,3-tetrafluoropropene, 1,1,1-trifluoro-2-chloropropene, 1-chloro-3,3,3-trifluoropropene, 1,1,1,2,3-pentafluoropropene, in cis or trans form, 1,1,1,4,4,4-hexafluorobutene, 1-bromopentafluoropropene, 2-bromopentafluoropropene, 3-bromopentafluoropropene, 1,1,2,3,3,4,4-heptafluoro-1-butene, 3,3,4,4,5,5,5-heptafluoro-1-pentene, 1-bromo-2,3,3,3-tetrafluoropropene, 2-bromo-1,3,3,3-tetrafluoropropene, 3-bromo-1,1,3,3-tetrafluoropropene, 2-bromo-3,3,3-trifluoropropene, E-1-bromo-3,3,3-trifluoropropene, 3,3,3-trifluoro-2-(trifluoromethyl)propene, 1-chloro-3,3,3-trifluoropropene, 2-chloro-3,3,3-trifluoropropene, and 1,1,1-trifluoro-2-butene.

The blowing agent can be present in an amount in between 1.0 wt.% to 20.0 wt.% based on the total weight of the mixture. In an embodiment, it is present in between 2.0 wt.% to 20.0 wt.%, or in between 3.0 wt.% to 20.0 wt.%, or in between 4.0 wt.% to 20.0 wt.%. In yet another embodiment, it is present in between 5.0 wt.% to 19.0 wt.%, or in between 6.0 wt.% to 19.0 wt.%, or in between 7.0 wt.% to 19.0 wt.%, or in between 8.0 wt.% to 19.0 wt.%. In still another embodiment, it is present in between 9.0 wt.% to 18.0 wt.%, or in between 10.0 wt.% to 18.0 wt.%, or in between 11.0 wt.% to 17.0 wt.%, or in between 12.0 wt.% to 17.0 wt.%, or in between 13.0 wt.% to 17.0 wt.%.

### Amine catalyst (E)

The amine catalyst can be selected from triethylamine, tributylamine, N-methylmorpholine, N-ethylmorpholine, N,N, N', N'-tetramethylethylenediamine, pentamethyl-diethylenetriamine and higher homologues, 1,4-diazabicyclo(2.2.2)octane, N-methyl-N'-dimethyl-aminoethylpiperazine, bis-(dimethylaminoalkyl)piperazines, tris(dimethylaminopropyl)hexahydro-1,3,5-triazin, N,N-dimethylbenzylamine, N,N-dimethylcyclohexylamine, N,N-diethyl-benzylamine, bis-(N,N-diethylaminoethyl) adipate, N,N,N',N'-tetramethyl-1,3-butanediamine, N,N-dimethyl-p-phenylethylamine, 1 2-dimethylimidazole, 2-methylimidazole, monocyclic and bicyclic amines together with bis-(dialkylamino)alkyl ethers, such as 2,2-bis-(dimethylaminoethyl)ether, and mixtures thereof.

It can also be selected from N-ethylmorpholine, N,N, N', N'-tetramethylethylenediamine, pentamethyl-diethylenetriamine and higher homologues, 1,4-diazabicyclo(2.2.2)octane, N-methyl-N'-dimethyl-aminoethylpiperazine, bis-(dimethylaminoalkyl)piperazines, tris(dimethylaminopropyl)hexahydro-1,3,5-triazin, N,N-dimethylbenzylamine, N,N-dimethylcyclohexylamine, N,N-diethyl-benzylamine, bis-(N,N-diethylaminoethyl) adipate, N,N,N',N'-tetramethyl-1,3-butanediamine, and N,N-dimethyl-p-phenylethylamine.

It can be further selected from N-methyl-N'-dimethyl-aminoethylpiperazine, bis-(dimethylaminoalkyl)piperazines, tris(dimethylaminopropyl)hexahydro-1,3,5-triazin, N,N-dimethylbenzylamine, N,N-dimethylcyclohexylamine, and N,N-diethyl-benzylamine.

Furthermore the amine catalyst can be N,N-dimethylcyclohexylamine.

The amine catalyst can be present in an amount in between 0.1 wt.% to 5.0 wt.% based on the total weight of the mixture. In another embodiment, it is present in between 0.5 wt.% to 5.0 wt.%, or in between 1.0 wt.% to 5.0 wt.%, or in between 2.0 wt.% to 5.0 wt.%. In still another embodiment, it is present in between 2.0 wt.% to 4.5 wt.%.

### Additive (F)

The mixture further can comprise at least one additive (F) selected from flame retardants, surfactants, dispersing agents, and mixtures thereof.

Suitable compounds for use as flame retardants include phosphorus compounds, nitrogen compounds and mixtures thereof. In one embodiment, the phosphorus compounds are selected from tricresyl phosphate (TCP), tris(2-chloroethyl)phosphate (TCEP), tris(2-chloropropyl)phosphate (TCPP), tris(2,3-dibromopropyl)phosphate, tris(1,3-dichloropropyl)phosphate, tris(2-chloroisopropyl)phosphate, tricresylphosphate, tri(2,2-dichloroisopropyl)phosphate, diethylN,N-bis(2-hydryethyl)aminomethylphosphonate, dimethyl methylphosphonate, tri(2,3-dibromopropyl)phosphate, tri(1,3-dichloropropyl)phosphate, tetra-kis-(2-chloroethyl)ethylene diphosphate, triethylphosphate, diammonium phosphate, diethyl ethanephosphonate (DEEP), triethyl phosphate (TEP), dimethyl propanephosphonate (DMPP) and diphenyl cresyl phosphate (DPK). In another embodiment, the phosphorus compound is selected from TCP, TEP, TCEP, and TCPP. In yet another embodiment, it is selected from TCPP and TEP.

In another embodiment, the nitrogen compounds are selected from benzoguanamine, tris(hydroxyethyl)isocyanurate, isocyanurate, allantoin, glycoluril, melamine, melamine cyanurate, melamine polyphosphate, dimelamine phosphate, melamine pyrophosphate, melamine borate, ammonium polyphosphate, melamine ammonium polyphosphate, melamine ammonium pyrophosphate, condensation product of melamine selected from the group consisting of melem, melam, melon and higher condensed compounds and other reaction products of melamine with phosphoric acid and melamine derivatives.

The flame retardant can be present in an amount in between 1.0 wt.% to 15.0 wt.%, based on the total weight of the mixture.

Suitable surfactants as additives include silicone surfactants. The silicone surfactants is preferably used to emulsify the mixture as well as to control the size of the bubbles of the foam so that a foam of desired cell structure is obtained. Silicone surfactants for use in the preparation of PU foams are available under a variety of tradenames known to those skilled in the art. Such materials have been found to be applicable over a wide range of formulations allowing uniform cell formation and maximum gas entrapment to achieve very low-density foam structure. In one embodiment, the silicone surfactant comprises a polysiloxane polyoxyalkylene block copolymer. Some representative silicone surfactants include Momentive's L-5130, L-5340, L-5440, L-6980, and L-6988; Air Products' DC-193, DC-197, DC-5582, and DC-5598; and Evonik's B-8404, B-8407, B-8409, and B-8462.

In another embodiment, the surfactant is a non-silicone, non-ionic surfactant. Such surfactants are selected from oxyethylated alkylphenols, oxethylated fatty alcohols, paraffin oils, castor oil esters, ricinoleic acid esters, turkey red oil, groundnut oil, paraffins, and fatty alcohols, The preferred non-silicone non-ionic surfactants are Air Products' Dabco LK-221 and LK-443, and Dow's Vorasurf^{™} 504.

In another embodiment, the surfactant is present in an amount in between 0.01 wt.% to 3.0 wt.%, based on the total weight of the mixture. In yet another embodiment, it is present in an amount in between 0.05 wt.% to 3.0 wt.%, or in between 0.075 wt.% to 2.5 wt.%, or in between 0.1 wt.% to 2.0 wt.%, or in between 0.5 wt.% to 1.5 wt.%.

In an embodiment, dispersing agent as additives include polymeric dispersants, for example, a polyester-based polymer dispersant, the dispersant is an acrylic polymer, polyurethane-based polymer dispersant, polyallylamine-based polymer dispersant, carbodiimide-based polymer dispersant, and a polyamide-based polymer dispersant. In another embodiment, the dispersing agent is selected from acrylic-based polymer dispersant and polyamide-based polymer dispersant.

Polyamide-based polymer dispersant include a polyester chain and side chain having a plurality of comb structure. In one embodiment, a large number of polyalkyleneimine in its main chain structure having a nitrogen atom, said nitrogen atom via an amide bond to the side chain of the polyester having a plurality of compounds are preferred. Such a polyamide-based polymer dispersant of a comb structure is also available under the tradename of DISPERBYK^{®} from BYK Chemie Co and SOLSPERSE from Lubrizol.

In one embodiment, the dispersing agent is present in an amount ir between 0.1 wt.% to 15.0 wt.%, based on the total weight of the mixture. In another embodiment, it is present in between 0.1 wt.% to 12.0 wt.%, or 0.1 wt.% to 10.0 wt.%. In still another embodiment, it is present in between 0.1 wt.% to 9.0 wt.%, or 0.1 wt.% to 8.0 wt.%. In yet another embodiment, it is present in between 0.1 wt.% to 7.0 wt.%, or 0.1 wt.% to 6.0 wt.%, or 0.1 wt.% to 5.0 wt.%.

In an embodiment, the additives may be added to the A-side or B-side component, as long as they do not have a detrimental effect on the properties of the PU foam. In one embodiment, the additives are added to the B-side component.

In another embodiment, the mixture may further comprise auxiliaries (G) selected from alkylene carbonates, carbonamides, pyrrolidones, dyes, pigments, IR absorbing materials, UV stabilizers, fungistats, bacterio-stats, hydrolysis controlling agents, curing agents, antioxidants, and cell regulators. Suitable amount of these auxiliaries includes 0.1 wt.% to 20 wt.%, based on the total weight of the mixture. Further details regarding these auxiliaries can be found, for example, in Kunststoffhandbuch, Volume 7, "Polyurethane" Carl-Hanser-Verlag Munich, 1st edition, 1966, 2nd edition, 1983 and 3rd edition, 1993. These ingredients may be added to the A-side or B-side component, as long as they do not have a detrimental effect on the properties of the PU foam.

### Process

The present invention is also directed towards a process for preparing the PU foam. The foam-forming process may be carried out batchwise, semi-continuously or continuously. In one embodiment, the isocyanate component (A) is reacted with the isocyanate reactive component (B) in the presence of carbon black (C), at least one blowing agent (D), at least one amine catalyst (E) and optionally at least one additive (F) and/or auxiliaries (G), as described herein.

In an embodiment, the isocyanate component (A) and the isocyanate reactive component (B) are mixed at an index in between 70 to 120. In another embodiment, the index is in between 80 to 120, or in between 80 to 110, or in between 90 to 110. In the present context, the index of 100 corresponds to one isocyanate group per one isocyanate reactive group.

In one embodiment, the carbon black (C) is added to the at least one isocyanate component (A) and/or the at least one isocyanate reactive component (B) prior to mixing. In another embodiment, (C), (D), (E) and optionally (F) and/or (G) are added to (B), prior to mixing. Said otherwise, the ingredients (C), (D), (E), optionally (F) and/or (G) are pre-mixed together with (B), for example in a mixing head, and then mixed with (A).

In another embodiment, when the carbon black is added to the at least one isocyanate component (A) and/or the at least one isocyanate reactive component (B) prior to mixing, the amount is based on the total weight of the respective component. For e.g. if the carbon black is added to the A-side, the amount added is in between 1.0 wt.% to 15.0 wt.% based on the total weight of the A-side. Similarly, if the carbon black is added to the B-side, the amount added is in between 1.0 wt.% to 15.0 wt.% based on the total weight of the B-side. Further, the amount added may also vary as disclosed above. Also, the ingredients (C), (D), (E), optionally (F) and/or (G) when pre-mixed to the B-side may be added in their respective amounts, as disclosed in claim 1.

In an embodiment, the ingredients (A), (B), C), (D), (E), and optionally (F) and/or (G) are mixed at temperature in between 10°C to 50°C for the PU foam forming reaction to start. It is usually not necessary to apply heat to the mixture to drive the cure, but this may be done too, if desired.

The mixture can be employed for pour-in-place applications or spray applications. In one embodiment, the mixture is useful for pour-in-place applications, wherein it is dispensed into a cavity and foams within the cavity to fill it and provide structural attributes and desired electrical resistivity to an assembly. The term "pour-in-place" refers to the fact that the foam is created at the location, where it is needed, rather than being created in one step and later assembled into place in a separate manufacturing step. Further, the term "cavity" refers to an empty or hollow space of any geometry having at least one open side into which the mixture can be dispensed at conditions such that expansion and curing of the composition occurs to form the PU foam.

In another embodiment, the mixture is useful for spray applications. Spraying techniques are used for filling molds and panels and for applying the mixture to plane surfaces. Spraying is particularly useful in applications, where large areas are involved, such as tanks or building walls. Sprayed PU foam coatings provide both physical strength and improved insulation. In spray applications, the mixing is accomplished by atomization. By the term "atomization", it is referred to the particles or droplets of the mixture obtained from suitable spraying means, such as not limited to, a nozzle or an atomizer.

In one embodiment, each of the isocyanate component (A) and the isocyanate reactive component (B), with ingredients (C), (D), (E) and optionally (F) and/or (G) pre-mixed to either A-side and/or B-side, are fed as a separate streams, for instance, in a mixing device. In one embodiment, the presently claimed invention refers to the two-component system (namely A-side and B-side), as described herein. However, it is possible that a multi-component system can also be used. By the term "multicomponent system", it is referred to any number of streams, at least more than the conventionally existing two streams in the two-component system. For example, three, four, five, six or seven, separate streams can be fed to the mixing device. These additional streams can comprise one or more selected from (A), (B), (C), (D), (E), (F) and (G), as described herein. In one embodiment, each of the streams in the multicomponent system is different from the A-side and B-side component streams. Hereinafter, the A-side component can be interchangeably also referred as first stream, while the B-side component as second stream.

Suitable mixing devices for the purpose of the presently claimed invention are well known to the person skilled in the art, for example, a mixing head or a static mixer. While it is preferred that each stream enters separately in the mixing device, it is possible that the components within each stream are well mixed by suitable mixing means, for example, the static mixer. Static mixers are well known to the person skilled in the art for mixing of liquids, for example, as described in EP 0 097 458. Typically, the static mixers are tubular apparatuses with fixed internals which serve for the mixing of individual stream across the cross section of the tube. Static mixers can be used in continuous process for the conduct of various operations, for example, mixing, substance exchange between two phases, chemical reactions or heat transfer. The homogenization of the streams is brought about via a pressure gradient produced by means of a pump.

Suitable temperatures for PU foam processing are well known to the person skilled in the art. In an embodiment, in the mixing device and/or the individual streams, a temperature in between 10°C to 50°C, or in between 15°C to 40°C can be maintained. However, each stream can be maintained at a different temperature and each stream does not necessarily have the same temperature. For instance, the temperature of the first stream can be 20°C, while that of the second stream can be 30°C.

In an embodiment, feeding of the streams into the mixing device is conducted preferably by means of pumps, which can operate at low-pressure or high-pressure, preferably at high pressure, in order to dispense the streams into the mixing device. Mixing within the mixing devices can be achieved among others by simple static mixer, low-pressure dynamic mixers, rotary element mixer as well as high-pressure impingement mixer. Mixing can be controlled by suitable means known to the person skilled in the art, for instance by simply switching on and off or even by a process control software equipped with flow meters, so that parameters, such as mixing ratio or temperature can be controlled.

In the present context, the term "low pressure" refers to pressure in between 0.1 MPa to 5 MPa, while "high pressure" refers to pressure above 5 MPa, preferably in between 5 MPa to 26 MPa.

In an embodiment, the ingredients (A), (B), (C), (D), (E), and optionally (F) and/or (G) are mixed in suitable mixing devices in any sequence. For instance, the ingredients can be added to the mixing device all at once or one by one or as pre-mixture of any of these ingredients and in combinations thereof. In another embodiment, the mixing in the claimed invention of claims 1 or 8 is carried out at rpm ranging between 500 rpm to 5000 rpm and for suitable duration known to the person skilled in the art.

In one embodiment, the PU foam the embodiment or as obtained in the claimed process has the desired electrical resistivity in the static dissipative range, i.e. 1.0×10² Ω.m to 1.0×10⁹ Ω.m, as determined according to ASTM D257-14. This renders the PU foam useful for applications including any relevant product requiring efficient electrical dissipation and the electro-magnetic shielding, such as, but not limited to, filled materials and composites for structural and decorative applications. Examples may include, but are not limited to wind turbine blades, airplane wings, and automotive parts. In other instances, such substantially electrically conductive PU-based materials may also target applications where metals have currently been used and where electro-magnetic shielding is required. The PU foam also has acceptable thermal conductivity values (or k-factor), in addition to the mechanical properties, which render it useful for insulation applications as well.

The acceptable mechanical properties of the PU foam of the claimed invention include such as, but not limited to, compressive strength, storage modulus, damping factor and damping capacity, Young's modulus, hardness, elongation at break, and tensile strength. Some of these have been reported in the example section below.

In another embodiment, the PU foam or as obtained in the claimed process is not used in electronics-manufacturing facility as well as in shipping electronic devices, such as the ones described in US 4,231,901.

Another aspect of the present invention is directed towards the use of the PU foam as claimed or as obtained in the claimed process for static dissipative materials.

Particularly, the static dissipative materials include cathodic protection systems, such as trench breakers or pipeline pillows.

The PU foam as claimed or as obtained according to claimed process can facilitate the construction and/or placement of new underground pipelines in terms of serving as three-dimensional pads and/or pillows which, as sprayed directly on and around an underground structure in place, may physically support, stabilize and protect the carbon steel structure as placed in an underground trench. The PU foam can further be spray applied to produce trench breakers which as applied in intermittent locations along underground trench may negotiate erosion of the trench created for installing a particular underground hazardous liquid or natural gas pipeline facility. The proficient installation of the PU foam offers several attributes with respect to reduced labour cost, reduced risk of employee injury (and even death) versus use of sandbags and increased productivity resulting from much faster jobsite completion.

The present invention is also directed towards a method for producing a composite structure comprising the PU foam as claimed or as obtained according to claimed process said method comprising: (M1) curing the mixture to obtain the composite structure which comprises a direct current electrical conductivity configured to conduct a provided current from an impressed current cathodic protection.

In an embodiment, the step (M1) comprises the following sub-steps:
(M11) adding one or more of the carbon black (C), blowing agent (D), amine catalyst (E) and optionally additives (F) to the isocyanate component (A) and/or the isocyanate reactive component (B),
(M12) mixing the at least one isocyanate component (A) and/or the at least one isocyanate reactive component (B) of step (M11) to obtain the mixture, and
(M12) curing the mixture.

In one embodiment, carbon black (C) is added to the isocyanate component (A) and the isocyanate reactive component (B) in step (M11). In another embodiment, the amount of carbon black (C) in the isocyanate component (A) is different than the amount of carbon black (C) in the isocyanate reactive component (B). In still another embodiment, the amount of carbon black (C) in the isocyanate component (A) and the isocyanate reactive component (B) is same.

In another embodiment, the composite structure comprises an electrically conductive pad, pillow or trench breaker for use in underground oil and gas pipeline facilities construction.

The present invention is also directed towards a trench breaker or pipeline pillow comprising the PU foam as claimed or as obtained in the claimed process.

The present invention is directed towards a method of supporting trench pipes comprising:
(T1) inserting into a trench in which or to which a pipe is to be or has been placed, the PU foam of the embodiment 1 or 2, and
(T2) backfilling the trench after the foam and the pipe have been inserted into the trench.

### Examples

The presently claimed invention is illustrated by the non-restrictive examples which are as follows:

### Raw materials

| POLYOL (P) | | |
|---|---|---|
| P1 | Polyether polyol based on ethanolamine initiator and a mixture of ethylene oxide and propylene oxide, having a nominal functionality ranging between 2.9 to 3.1 and OH value in between 490 mg KOH/g to 520 mg KOH/g, obtained from BASF | |

| ISOCYANATE (ISO) | | |
|---|---|---|
| ISO 1 | Polymeric MDI with NCO content of 31.5 wt.-% and functionality=2.7, obtained from BASF | |

| CARBON BLACK (CB) | | |
|---|---|---|
| CB 1 | Carbon black having a BET surface area of 1000 m²/g, obtained from Orion Engineered Carbons | |
| CB 2 | Carbon black having BET surface area of 235 m²/g, obtained from Cabot Corporation | |
| CB3 | Commercially available carbon black having BET surface area of 58.5 m²/g, obtained from Alfa Aesar | |

| BLOWING AGENT (BA) | | |
|---|---|---|
| BA 1 | Water | |
| BA 2 | 1,1,1,3,3-pentafluoropropane (HFC 245fa), obtained from Honeywell | |

| AMINE CATALYST (AC) | | |
|---|---|---|
| AC 1 | N,N-Dimethylcyclohexylamine, obtained from Sigma Aldrich | |

| ADDITIVE PACKAGE (AP) | | |
|---|---|---|
| AP 1 | Flame retardant - TCPP | |
| | Surfactant - Dabco LK-221 from Air Products | |
| | Bis-oct | |

| Standard method | | |
|---|---|---|
| DIN 53240 | | OH value |
| ASTM D257-14 | | Electrical resistivity |
| ASTM D1622 | | Foam density |
| ASTM D6556-19a | | BET surface area |
| ASTM D1621-16 | | Compressive strength |

### General synthesis of mixture for producing PU foam

The aforementioned raw materials were added in the amounts mentioned in Table 1 in both the A-side and B-side components (all in wt.%). Both the A-side and B-side components were then added to a mixing cup and subjected to mixing at rpm of 3000 to obtain a desired index. The temperature of A-side and B-side components was maintained between 25°C to 30°C.

The PU foams thus obtained were subsequently cut into samples of 50mm × 10mm discs and the properties determined are reported in Table 1 and 2 below.

**Table 1: inventive and comparative examples**

| Ingredient | CE 1 | IE 1 | IE 2 | CE 2 | CE 3 |
|---|---|---|---|---|---|
| A-side component (wt.%) | | | | | |
| ISO 1 | 100 | 96.25 | 96 | 100 | 100 |
| CB 1 | -- | 3.75 | 4.0 | -- | -- |
| Viscosity mPas at 15°C | 206 | n.d. | 6579 | n.d. | n.d. |

| B-side component (wt.%) | | | | | |
|---|---|---|---|---|---|
| P1 | 70.47 | 67.91 | 67.74 | 67.33 | 67.33 |
| AC 1 | 4.00 | 3.86 | 3.85 | 3.98 | 3.98 |
| CB 1 | -- | 3.64 | 3.87 | -- | -- |
| AP 1 | 10.64 | 10.25 | 10.23 | 10.57 | 10.57 |
| BA 2 | 13.09 | 12.61 | 12.58 | 12.98 | 12.98 |
| BA 1 | 1.79 | 1.73 | 1.73 | 1.77 | 1.77 |
| CB 2 | -- | -- | -- | 3.37 | -- |
| CB 3 | -- | -- | -- | -- | 3.37 |
| Viscosity mPas at 15°C | 88 | n.d. | 3623 | 654 | 1530 |

| PU foam | | | | | |
|---|---|---|---|---|---|
| Index | 101 | 106 | 105 | 107 | 107 |
| Density kg/m³ | 27-40 | 27-40 | 27-40 | 33.00 | 35.56 |
| Electrical resistivity Ω.m | 6.40×10¹¹ | 8.88×10⁵ | 3.78×10⁷ | 6.81×10¹¹ | 9.41×10¹¹ |
| Compressive strength, Pa | >124,000 | >124,000 | >124,000 | n.d. | n.d. |

| | | | | | |
|---|---|---|---|---|---|
| n.d. = not determined | | | | | |

**Table 2: Effect of carbon black on electrical resistivity**

| Ingredient | CE 4 | CE 5 | IE 3 |
|---|---|---|---|
| A-side component (wt.%) | | | |
| ISO 1 | 100 | 100 | 100 |
| CB 1 | -- | -- | -- |

| B-side component (wt.%) | | | |
|---|---|---|---|
| P1 | 64.37 | 64.37 | 64.37 |
| AC 1 | 3.98 | 3.98 | 3.98 |
| CB 1 | -- | -- | 6.44 |
| CB 2 | -- | 6.44 | -- |
| CB 3 | 6.44 | -- | -- |
| AP 1 | 10.57 | 10.57 | 10.57 |
| BA 2 | 12.88 | 12.88 | 12.88 |
| BA 1 | 1.77 | 1.77 | 1.77 |
| Viscosity, mPas at 15°C | >100,000 | >100,000 | >100,000 |

| PU foam | | | |
|---|---|---|---|
| Index | 110 | 110 | 110 |
| Density, kg/m³ | 30.92 | 35.32 | 38.04 |
| Electrical resistivity, Ω.m | 6.86×10¹¹ | 5.83×10¹¹ | 1.26×10⁵ |

As evident in Tables 1 and 2, the absence of carbon black in CE 1 does not result in the electrical resistivity in the static dissipative range but was more insulative. However, the presence of carbon black CB 1 in A-side and/or B-side results in substantial improvement in the electrical resistivity. Particularly, IE 1 and IE 2 disclosing carbon black in A-side as well as B-side, and IE 3 disclosing carbon black in only B-side result in electrical resistivity in the static dissipative range. Further, the inventive PU foams had acceptable or similar compressive strength, as the comparative PU foams.

Furthermore, when equal amounts of carbon blacks, but with different BET surface areas, were added to the mixture or in the B-side, the resulting PU foam had different electrical resistivities. As shown in Table 2, only IE 3 having carbon black with BET surface area as per the present invention was able to showcase electrical resistivity in the static dissipative range, while CE 4 and CE 5 were insulative in nature, i.e. electrical resistivity in magnitude much higher than 1.0×10⁹ Ω.m.

Thus, the present invention PU foam is suitable for applications described hereinabove, for e.g. trench breakers or pipeline pillows.

## Claims

1. A polyurethane foam which is obtained by reacting a mixture comprising:
(A) at least one isocyanate component,
(B) at least one isocyanate reactive component comprising a first polyether polyol having a nominal functionality in between 2.0 to 3.5 and OH value in between 450 mg KOH/g to 600 mg KOH/g,
(C) carbon black having a BET surface area in between 600 m²/g to 1200 m²/g according to method ASTM D6556 -19a
(D) at least one blowing agent, and
(E) at least one amine catalyst,
wherein the amount of carbon black (C) is in between 1.0 wt.% to 15.0 wt.% based on the total weight of the mixture.

2. The polyurethane foam according to claim 1, wherein the isocyanate component is selected from methylene diphenyl diisocyanate and polymeric methylene diphenyl diisocyanate.

3. The polyurethane foam according to claim 1 or 2, wherein the carbon black has a BET surface area in between 900 m²/g to 1050 m²/g.

4. The polyurethane foam according to one or more of claims 1 to 3, wherein the amount of carbon black is in between 3.0 wt.% to 11.0 wt.% based on the total weight of the mixture.

5. The polyurethane foam according to one or more of claims 1 to 4, wherein the blowing agent is selected from water and hydrofluorocarbons.

6. The polyurethane foam according to one or more of claims 1 to 5, wherein the mixture further comprises at least one additive (F) selected from flame retardants, surfactants, dispersing agents, and mixtures thereof.

7. The polyurethane foam according to one or more of claims 1 to 6 having a foam density in between 30 kg/m³ to 150 kg/m³ determined according to ASTM D1622 and an electrical resistivity in between 1.0 × 10² Ω.m to 1.0 × 10⁹ Ω.m determined according to ASTM D257-14.

8. A process for preparing the polyurethane foam according to one or more of claims 1 to 7.

9. The process according to claim 8, wherein the isocyanate component (A) and the isocyanate reactive component (B) are mixed at an index in between 70 to 120.

10. Use of the polyurethane foam according to one or more of claims 1 to 7 or as obtained according to claims 8 or 9 for static dissipative materials.

11. The use according to claim 10, wherein the static dissipative material comprises trench breaker or pipeline pillow.

12. A method for producing a composite structure comprising the polyurethane foam according to one or more of claims 1 to 7 or as obtained according to claims 8 or 9, said method comprising:
(M1) curing the mixture to obtain the composite structure which comprises a direct current electrical conductivity configured to conduct a provided current from an impressed current cathodic protection.

13. The method according to claim 12, wherein the composite structure comprises an electrically conductive pad, pillow or trench breaker for use in underground oil and gas pipeline facilities construction.

14. A trench breaker or pipeline pillow comprising the polyurethane foam according to one or more of claims 1 to 7 or as obtained according to claims 8 or 9.

15. A method of supporting trench pipes comprising:
(T1) inserting into a trench in which or to which a pipe is to be or has been placed, the polyurethane foam according to one or more of claims 1 to 7 or as obtained according to claims 8 or 9, and
(T2) backfilling the trench after the foam and the pipe have been inserted into the trench.

## Patentansprüche

1. Polyurethanschaum, der durch ein Umsetzen einer Mischung erhalten wird, umfassend:
(A) mindestens eine Isocyanatkomponente,
(B) mindestens eine isocyanat-reaktive Komponente, umfassend ein erstes Polyetherpolyol, das eine Nennfunktionalität zwischen 2,0 bis 3,5 und einen OH-Wert zwischen 450 mg KOH/g bis 600 mg KOH/g aufweist,
(C) Ruß, der eine BET-Oberfläche zwischen 600 m²/g bis 1200 m²/g aufweist, gemäß dem Verfahren ASTM D6556-19a
(D) mindestens ein Treibmittel und
(E) mindestens einen Aminkatalysator,
wobei die Menge von Ruß (C) zwischen 1,0 Gew.-% und 15,0 Gew.-% liegt, basierend auf dem Gesamtgewicht der Mischung.

2. Polyurethanschaum nach Anspruch 1, wobei die Isocyanatkomponente aus Methylendiphenyldiisocyanat und polymerem Methylendiphenyldiisocyanat ausgewählt ist.

3. Polyurethanschaum nach Anspruch 1 oder 2, wobei der Ruß eine BET-Oberfläche zwischen 900 m²/g bis 1050 m²/g aufweist.

4. Polyurethanschaum nach einem oder mehreren der Ansprüche 1 bis 3, wobei die Menge von Ruß zwischen 3,0 Gew.-% bis 11,0 Gew.-% liegt, basierend auf dem Gesamtgewicht der Mischung.

5. Polyurethanschaum nach einem oder mehreren der Ansprüche 1 bis 4, wobei das Treibmittel aus Wasser und Fluorkohlenwasserstoffen ausgewählt ist.

6. Polyurethanschaum nach einem oder mehreren der Ansprüche 1 bis 5, wobei die Mischung ferner mindestens ein Additiv (F) umfasst, das aus Flammschutzmitteln, Tensiden, Dispergiermitteln und Mischungen davon ausgewählt ist.

7. Polyurethanschaum nach einem oder mehreren der Ansprüche 1 bis 6, der eine Schaumdichte zwischen 30 kg/m³ bis 150 kg/m³, bestimmt gemäß ASTM D1622, und einen elektrischen Widerstand zwischen 1,0 × 10² Ω.m bis 1,0 × 10⁹ Ω.m aufweist, bestimmt gemäß ASTM D257-14.

8. Verfahren zum Herstellen des Polyurethanschaums nach einem oder mehreren der Ansprüche 1 bis 7.

9. Verfahren nach Anspruch 8, wobei die Isocyanatkomponente (A) und die isocyanat-reaktive Komponente (B) in einem Index zwischen 70 und 120 gemischt werden.

10. Verwendung des Polyurethanschaums nach einem oder mehreren der Ansprüche 1 bis 7 oder wie erhalten nach den Ansprüchen 8 oder 9 für statische dissipative Materialien.

11. Verwendung nach Anspruch 10, wobei das statische dissipative Material Grabenbrecher oder Rohrleitungskissen umfasst.

12. Verfahren zum Herstellen einer Verbundstruktur, umfassend den Polyurethanschaum nach einem oder mehreren der Ansprüche 1 bis 7 oder wie erhalten nach den Ansprüchen 8 oder 9, das Verfahren umfassend:
(M1) Härten der Mischung, um die Verbundstruktur zu erhalten, die eine direkte elektrische Leitfähigkeit umfasst, die konfiguriert ist, um einen bereitgestellten Strom von einem eingeprägten kathodischen Stromschutz zu leiten.

13. Verfahren nach Anspruch 12, wobei die Verbundstruktur ein elektrisch leitfähiges Pad, Kissen oder Grabenbrecher zur Verwendung in der Konstruktion von unterirdischen Öl- und Gasrohrleitungseinrichtungen umfasst.

14. Grabenbrecher oder Rohrleitungskissen, umfassend den Polyurethanschaum nach einem oder mehreren der Ansprüche 1 bis 7 oder wie erhalten nach den Ansprüchen 8 oder 9.

15. Verfahren zum Stützen von Grabenrohren, umfassend:
(T1) Einführen in einen Graben, in dem oder an dem ein Rohr platziert werden soll oder wurde, des Polyurethanschaums nach einem oder mehreren der Ansprüche 1 bis 7 oder wie erhalten nach den Ansprüchen 8 oder 9 und
(T2) Rückfüllen des Grabens, nachdem der Schaum und das Rohr in den Graben eingeführt wurden.

## Revendications

1. Mousse de polyuréthane qui est obtenue par la réaction d'un mélange comprenant :
(A) au moins un composant isocyanate,
(B) au moins un composant réactif aux isocyanates comprenant un premier polyol de polyéther ayant une fonctionnalité nominale comprise entre 2,0 et 3,5 et une valeur OH comprise entre 450 mg KOH/g à 600 mg KOH/g,
(C) noir de carbone ayant une surface BET comprise entre 600 m²/g et 1200 m²/g selon la méthode ASTM D6556-19a
(D) au moins un agent d'expansion, et
(E) au moins un catalyseur amine,
dans laquelle la quantité de noir de carbone (C) est comprise entre 1,0 % en poids et 15,0 % en poids sur la base du poids total du mélange.

2. Mousse de polyuréthane selon la revendication 1, dans laquelle le composant isocyanate est choisi parmi le diisocyanate de méthylène diphényle et le diisocyanate de méthylène diphényle polymère.

3. Mousse de polyuréthane selon la revendication 1 ou 2, dans laquelle le noir de carbone a une surface BET comprise entre 900 m²/g à 1050 m²/g.

4. Mousse de polyuréthane selon une ou plusieurs des revendications 1 à 3, dans laquelle la quantité de noir de carbone est comprise entre 3,0 % en poids et 11,0 % en poids sur la base du poids total du mélange.

5. Mousse de polyuréthane selon une ou plusieurs des revendications 1 à 4, dans laquelle l'agent d'expansion est choisi parmi l'eau et les hydrofluorocarbures.

6. Mousse de polyuréthane selon une ou plusieurs des revendications 1 à 5, dans laquelle le mélange comprend en outre au moins un additif (F) choisi parmi les ignifugeants, les surfactants, les agents de dispersion et mélanges de ceux-ci.

7. Mousse de polyuréthane selon une ou plusieurs des revendications 1 à 6, ayant une densité de mousse comprise entre 30 kg/m³ et 150 kg/m³ déterminée selon ASTM D1622 et une résistivité électrique comprise entre 1,0 × 10² Ω.m et 1,0 × 10⁹ Ω.m déterminée selon ASTM D257-14.

8. Procédé de préparation de la mousse de polyuréthane selon une ou plusieurs des revendications 1 à 7.

9. Procédé selon la revendication 8, dans lequel le composant isocyanate (A) et le composant réactif aux isocyanates (B) sont mélangés à un indice compris entre 70 et 120.

10. Utilisation de la mousse de polyuréthane selon une ou plusieurs des revendications 1 à 7 ou telle qu'obtenue selon les revendications 8 ou 9 pour des matériaux dissipatifs statiques.

11. Utilisation selon la revendication 10, dans laquelle le matériau dissipatif statique comprend un brise-tranchée ou un coussin de pipeline.

12. Procédé de production d'une structure composite comprenant la mousse de polyuréthane selon une ou plusieurs des revendications 1 à 7 ou tel qu'obtenue selon les revendications 8 ou 9, ledit procédé comprenant :
(M1) le durcissement du mélange pour obtenir la structure composite qui comprend une conductivité électrique à courant continu configurée pour conduire un courant fourni à partir d'une protection cathodique actuelle imprimée.

13. Procédé selon la revendication 12, dans lequel la structure composite comprend une dalle, un coussin ou un brise-tranchée électriquement conducteur destiné à être utilisé dans la construction d'installations souterraines de pipeline de pétrole et de gaz.

14. Brise-tranchée ou coussin de pipeline comprenant la mousse de polyuréthane selon une ou plusieurs des revendications 1 à 7 ou tel qu'obtenue selon les revendications 8 ou 9.

15. Procédé de support de tuyaux de tranchée comprenant :
(T1) l'insertion dans une tranchée dans laquelle ou vers laquelle un tuyau doit être ou a été placé, la mousse de polyuréthane selon une ou plusieurs des revendications 1 à 7 ou telle qu'obtenue selon les revendications 8 ou 9, et
(T2) le remplissage de la tranchée après insertion de la mousse et du tuyau dans la tranchée.
